# EUROPÄISCHE PATENTSCHRIFT

(11) **EP 3 231 591 B1**
(45) Veröffentlichungstag und Bekanntmachung des Hinweises auf die Patenterteilung: **19.04.2023**
(21) Anmeldenummer: 17155395.1
(22) Anmeldetag: 09.02.2017
(51) Int. Cl.: B29C 70/50, B32B 5/14, B32B 3/26, B29C 35/02, B29C 70/40, B29B 15/10, B29B 15/12, B29C 70/00, B32B 27/12, B32B 27/28, B32B 27/36, B32B 27/38, B32B 27/40, B32B 27/42, B32B 5/08, B32B 5/26, B32B 7/04, B29K 101/10, B29K 101/12, B29L 31/30, B29L 31/52, B29K 21/00

(54) **FASERVERBUNDLAMINAT UND VERFAHREN ZUM HERSTELLEN EINES FASERVERBUNDLAMINATS**
FIBRE COMPOUND LAMINATE AND METHOD FOR PREPARING A FIBRE COMPOUND LAMINATE
STRATIFIÉ COMPOSITE À FIBRES ET SON PROCÉDÉ DE FABRICATION

(30) Priorität: 14.04.2016 DE 102016206325
(43) Veröffentlichungstag der Anmeldung: 18.10.2017
(73) Patentinhaber: Airbus Defence and Space GmbH, 82024 Taufkirchen (DE)
(72) Erfinder: BUCHMANN, Christopher, 81377 München (DE); WEIMER, Christian, 81539 München (DE); MEIER, Christoph, 81739 München (DE); GRÜNEWALD, Jonas, 81547 München (DE)
(74) Vertreter: Isarpatent

(56) Entgegenhaltungen:
- CN-A- 105 492 200
- DE-A1-102005 008 252
- US-A1- 2002 037 391

## Beschreibung

### TECHNISCHES GEBIET DER ERFINDUNG

Die Erfindung betrifft ein Faserverbundlaminat, ein Fahrzeug mit einem Fahrzeugbauteil, welches ein Faserverbundlaminat aufweist, ein Fahrrad mit einem Fahrradbauteil, welches ein Faserverbundlaminat aufweist, einen Sportartikel mit einem Sportartikelbauteil, welches ein Faserverbundlaminat aufweist, sowie ein Verfahren zum Herstellen eines Faserverbundlaminats, insbesondere für einen Einsatz in der Herstellung von Bauteilen mit verbesserten Materialeigenschaften, beispielsweise im Luft- und Raumfahrtbereich, im Automobilbau, im Motorradbau, im Fahrradbau oder in der Sportartikelherstellung.

### TECHNISCHER HINTERGRUND

Bauteile von Fahrzeugen, die für einen Nutzer während des normalen Gebrauchs des Fahrzeugs sichtbar sind, handelt es sich um sogenannte Sichtbauteile. Derartige Sichtbauteile stellen höhere Anforderungen an die visuelle und haptische Anmutung, da der optische Eindruck, der sich dem Nutzer durch Betrachtung des Sichtbauteils bietet, häufig mit der vermeintlichen bzw. empfundenen Qualität des Fahrzeugs skaliert. Bei solchen Sichtbauteilen kann es sich zum Beispiel um Interieurkomponenten wie etwa Instrumententafeln, Mittelkonsolen oder Armaturenelemente oder um Exterieurkomponenten eines Kraftfahrzeugs wie etwa Kotflügel, Motorhauben oder auch Fahrzeugverdecke handeln. Die Druckschrift DE 10 2013 014 111 A1 beispielsweise offenbart ein Sichtbauteil mit einer das Bauteil abdeckenden transparenten und/oder transluzenten Deckschicht. Die Druckschrift DE 10 2013 002 364 A1 offenbart faserverstärkte Kraftfahrzeug-Sichtbauteile mit einer Verstärkungslage, einer Decklage und einer zwischen der Verstärkungslage und der Decklage liegenden Dämpfungslage.

Wenn Faserverbundkomponenten (FVKs) als Sichtbauteile verwendet werden, kann die oben aufliegende Lage aus kohlenstofffaserverstärktem Kunststoff opak ausgebildet werden. Dadurch entsteht ein nach außen auftretender optischer Eindruck der einzelnen Fasern, weshalb bei carbonfaserverstärkten Sichtbauteilen auch von Carbon-Sichtbauteilen mit "Carbon-Optik" gesprochen werden kann.

Die Druckschrift EP 2 666 617 A1 offenbart ein Verfahren zum Herstellen von lokal verstärkten Faserverbundlaminaten, in dem mehrere Vorformlinge mittels thermoplastischem Garn zusammengenäht und dann gemeinsam ausgehärtet werden. Das Dokument Dallner, C.; Sandler, J.; Hillebrecht, M. Reul, W.: "Faserverbundkonzept für ein Cabrio-Dachmodul", ATZProduktion, Nr. 3, September 2012, Springer Vieweg, Springer Fachmedien Wiesbaden GmbH (http://www.plasticsportal.net/wa/plasticsEU~de_DE/function/conversions:/publish/co mmon/upload/technicalJournals/automobiles/Fibre_roof.pdf) offenbart ein Cabrio-Dachmodul in Faserverbund-Sandwich-Bauweise, welches im Vergleich zu metallischen Konzepten ein hohes Leichtbaupotenzial aufweist.

Die Druckschrift DE 10 2005 008 252 A1 offenbart ein Verfahren zum Herstellen eines Faserverbundlaminats. Die Druckschrift CN 105 492 200 A offenbart Sandwichstrukturen aus einer Hautkomponente und einer Kernkomponente.

Es besteht jedoch ein Bedarf an Sichtbauteilen mit homogener Oberflächenoptik, die gleichzeitig bereichsweise unterschiedliche mechanische Eigenschaften aufweisen können.

### ZUSAMMENFASSUNG DER ERFINDUNG

Eine der Aufgaben der Erfindung besteht daher darin, ein Faserverbundlaminat mit lokal variierender mechanischer Flexibilität und homogener Oberflächenstruktur zu schaffen.

Diese und andere Aufgaben werden durch ein Verfahren zum Herstellen eines Faserverbundlaminats mit den Merkmalen des Anspruchs 1, ein Faserverbundlaminat mit den Merkmalen des Anspruchs 7, ein Fahrzeug mit einem ein erfindungsgemäßes Faserverbundlaminat aufweisendes Fahrzeugbauteil mit den Merkmalen des Anspruchs 13, ein Fahrrad mit einem ein erfindungsgemäßes Faserverbundlaminat aufweisendes Fahrradbauteil mit den Merkmalen des Anspruchs 14 und einen Sportartikel mit einem ein erfindungsgemäßes Faserverbundlaminat aufweisendes Sportartikelbauteil mit den Merkmalen des Anspruchs 15 gelöst.

Gemäß einem ersten Aspekt der Erfindung umfasst ein Verfahren zum Herstellen von Faserverbundlaminaten einen Schritt des Beaufschlagen eines ersten Vorformlings, welcher ein oder mehrere trockene Faserlagen und ein thermoplastisches Elastomer aufweist, mit Druck und/oder Wärme, so dass der thermoplastische Anteil des thermoplastischen Elastomers die trockenen Faserlagen des ersten Vorformlings in zumindest einem ersten Bereich vollständig tränkt und in zumindest einem zweiten Bereich nur teilweise tränkt. In einem weiteren Schritt erfolgt ein Tränken und Aushärten der nicht durch den thermoplastischen Anteil des thermoplastischen Elastomers getränkten, noch trockenen Faserlagen des zweiten Bereichs des ersten Vorformlings in einer duroplastischen Kunststoffmatrix. Dabei erfolgt ein Einbetten der trockenen Faserlagen in einer thermoplastischen Elastomermatrix zur Herstellung des ersten Vorformlings. Ferner werden der Druck und/oder die Wärme im Schritt des Beaufschlagens des ersten Vorformlings lokal variiert.

Gemäß einem zweiten Aspekt der Erfindung umfasst ein Faserverbundlaminat ein oder mehrere Faserlagen sowie einen ersten Laminatbereich, in dem die Faserlagen des Faserverbundlaminats mit einem thermoplastischen Elastomermaterial getränkt sind, und einen zweiten Laminatbereich, in dem Faserlagen einer ersten Schicht des Faserverbundlaminats mit der thermoplastischen Elastomermatrix und Faserlagen mindestens einer über der ersten Schicht liegenden zweiten Schicht des Faserverbundlaminats mit einer duroplastischen Kunststoffmatrix getränkt sind. Das Faserverbundlaminat wird erfindungsgemäß mit einem Verfahren gemäß dem ersten Aspekt der Erfindung hergestellt. Das Faserverbundlaminat kann dabei ein flächiges Laminat sein, in welchem die ersten und zweiten Laminatbereiche entlang der Flächenerstreckung des Laminats aneinander angrenzen. Insbesondere kann das Faserverbundlaminat ein bahnförmiges Laminat sein, bei welchem die ersten und zweiten Laminatbereiche an senkrecht oder im Wesentlichen senkrecht zu der Bahnverlaufsrichtung des Laminats stehenden Grenzlinien aneinander angrenzen.

Gemäß einem dritten Aspekt der Erfindung umfasst ein Fahrzeug ein Fahrzeugbauteil mit einem Faserverbundlaminat gemäß dem zweiten Aspekt der Erfindung. Das Fahrzeugbauteil kann in einigen Ausführungsformen ein Sichtbauteil, insbesondere ein Carbon-Sichtbauteil aufweisen. In einigen Ausführungsformen kann das Sichtbauteil ein Fahrzeugverdeck, eine Instrumententafel, eine Armaturenkomponente oder eine Konsolenabdeckung umfassen.

Gemäß einem vierten Aspekt der Erfindung umfasst ein Fahrrad ein Fahrradbauteil mit einem Faserverbundlaminat gemäß dem zweiten Aspekt der Erfindung. Das Fahrradbauteil kann in einigen Ausführungsformen einen Fahrradsattel, ein Rahmenbauteil, ein Schutzblech oder eine andere in einem Fahrrad verbaute Komponente umfassen.

Gemäß einem fünften Aspekt der Erfindung umfasst ein Sportartikel ein Sportartikelbauteil mit einem Faserverbundlaminat gemäß dem zweiten Aspekt der Erfindung. Der Sportartikel kann in einigen Ausführungsformen einen Skistiefel, einen Snowboardstiefel, einen Ski, ein Snowboard, einen Tennisschläger, einen Golfschläger, ein Segelboot oder einen Eishockeyschläger umfassen.

Eine wesentliche Idee der Erfindung besteht darin, großflächige faserverstärkte Laminate mit teilweise elastischen und teilweise festen Bereichen herzustellen. Durch einen unterschiedlichen Tränkungsgrad der Faserlagen eines Decklagenhalbzeugs mit thermoplastischem Elastomer in den unterschiedlichen Bereichen kann ein hybridimprägnierter Bereich erzeugt werden, im dem Faserlagen unterer Schichten mit thermoplastischem Elastomer und Faserlagen darüber liegender Schichten mit einem Duromer getränkt sind. Außerdem kann dem durch Duromer getränkten Bereich eine selektive formschlüssige Verbindung weiterer Vorformlinge an das Laminat erreicht werden. Durch das Auflaminieren weiterer Faserlagen oder Kernstrukturen kann die Biegesteifigkeit in den nur teilweise mit thermoplastischem Elastomer getränkten Bereichen gezielt verändert werden. In den übrigen Bereichen kann die vollständige Tränkung mit thermoplastischem Elastomer zu einer komplett einheitlichen Imprägnierung des Laminats bei gleichzeitig hoher Flexibilität führen.

Durch die Verwendung einer gemeinsamen Decklage bleibt trotz der unterschiedlich flexiblen Bereiche das Laminat insgesamt optisch homogen. Außerdem bleiben die Faserlagen der Decklage nach außen hin sichtbar, so dass eine homogene Carbon-Anmutung des Bauteils erzielt werden kann. Außerdem führt die Verwendung einer gemeinsamen Decklage zu einer Vermeidung oder zumindest einer Verringerung von Nahtbereichen, in denen die Decklage nicht integral ausgebildet ist. Dadurch kann vorteilhafterweise eine bessere Wasserdichtigkeit des Laminats und damit eines daraus gefertigten Bauteils erzielt werden.

Die durchgehenden Fasern des hergestellten Laminats gewährleisten außerordentlich gute mechanische Eigenschaften des daraus hergestellten Bauteils. Weiterhin können in vorteilhafter Weise große Mengen des Laminats beispielsweise durch kontinuierliches Verpressen zwischen Rollenelementen gefertigt werden, was zu geringen Fertigungszeiten und damit verbundenen geringen Fertigungskosten führt.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen des erfindungsgemäßen Verfahrens kann die duroplastische Kunststoffmatrix Epoxidharze, ungesättigte Polyesterharze, Vinylesterharze, Phenylformaldehydharze, Diallylphthalatharze, Methacrylatharze, Polyurethane und/oder Melaminharze aufweisen. Die duroplastische Kunststoffmatrix ermöglicht die Ausbildung einer verbesserten Biegesteifigkeit der zweiten Bereiche des Laminats. Die duroplastische Kunststoffmatrix ist in vorteilhafter Weise auch nur in den zweiten Bereichen vorhanden, so dass die vollständig durch das thermoplastische Elastomer getränkten ersten Bereiche relativ flexibel bleiben. Außerdem kann über die duroplastische Kunststoffmatrix eine formschlüssige Anbindung der noch nicht durch das thermoplastische Elastomer durchtränkten Faserlagen des ersten Vorformlings an trockene Faserlagen eines zweiten Vorformlings erfolgen, der zur Verstärkung der zweiten Bereiche auf den ersten Vorformling auflaminiert werden kann.

Gemäß einiger Ausführungsformen des erfindungsgemäßen Verfahrens kann das thermoplastische Elastomer thermoplastische Elastomere auf Urethanbasis aufweisen. Solche thermoplastischen Elastomere lassen sich in rein physikalischen Prozessen unter Einwirkung von Wärme und mechanischen Kräften wie Druck oder Scherkräften verarbeiten, wodurch die notwendige Bearbeitungszeitspanne gegenüber chemischen Prozessen erheblich verkürzt werden kann. Das ermöglicht in vorteilhafter Weise eine kostengünstige Verarbeitung in großen Mengen und unter Einsatz mechanisch wirkender Maschinen, die beispielsweise Pressrollen bzw. -walzen einsetzen.

Gemäß einiger Ausführungsformen des erfindungsgemäßen Verfahrens können die trockenen Faserlagen Carbonfasern oder Glasfasern umfassen. Insbesondere Carbonfasern, die auf der Vorderseite des fertigen Laminats durchlaufend sind, können für eine optisch ansprechende Carbon-Optik eines Bauteils mit einem solchen Laminat sorgen.

Gemäß einiger Ausführungsformen des erfindungsgemäßen Verfahrens kann das Verfahren weiterhin den Schritt des Anordnens mindestens eines zweiten Vorformlings auf dem ersten Vorformling in dem zweiten Bereich aufweisen. Dabei kann ein Tränken und Aushärten des mindestens einen zweiten Vorformlings in der duroplastischen Kunststoffmatrix gemeinsam mit dem Tränken und Aushärten der noch trockenen Faserlagen ersten Vorformlings erfolgen. Der mindestens eine zweite Vorformling kann in einigen Ausführungsformen trockene Faserlagen aus einem Fasermaterial aufweisen, welches sich von dem Fasermaterial der trockenen Faserlagen des ersten Vorformlings unterscheidet. Durch gezielte Aufbringung von weiteren Faserschichten über ein oder mehrere Vorformlinge kann das fertige Faserverbundlaminat in der Dicke und damit der Biegesteifigkeit lokal angepasst werden. Die weiteren Vorformlinge können in vorteilhafter Weise im selben Schritt wie der erste Vorformling mit der duroplastischen Kunststoffmatrix getränkt werden, wodurch gleichzeitig mit der Imprägnierung eine formschlüssige Verbindung aller Vorformlinge zu einem einheitlichen Laminat erfolgt.

Besonders vorteilhaft ist es dabei, dass das Fasermaterial der zweiten Vorformlinge unabhängig vom Fasermaterial des ersten Vorformlings gewählt werden kann. Dadurch ist es zum Beispiel möglich, die Fasern der zweiten Vorformlinge nach Gesichtspunkten der mechanischen Belastbarkeit des Faserverbundlaminats und die Fasern des ersten Vorformlings nach Gesichtspunkten der optischen Anmutung auszuwählen. Die zweiten Vorformlinge sind lediglich auf der der Deckschicht abgewandten Seite aufgebracht und damit bei einer Verwendung in Sichtbauteilen von außen nicht sichtbar. Dies ermöglicht in vorteilhafter Weise die Ausbildung einer homogenen Oberflächenstruktur des Laminats auf der Außenseite. Die Versteifungen, die durch die Anordnung des bzw. der zweiten Vorformlings/e auf der Rückseite des Laminats eingebracht werden können, sind dann vorteilhafterweise von der Vorderseite nicht sichtbar. Der optische Gesamteindruck eines unter Verwendung des gebildeten Laminats gefertigten Bauteils wird dadurch verbessert.

Beispielhaft kann das Verfahren weiterhin den Schritt des Einbettens einer thermoplastischen Elastomerfolie als thermoplastisches Elastomer in den trockenen Faserlagen zur Herstellung des ersten Vorformlings oder des Einbettens der trockenen Faserlagen in einer thermoplastischen Elastomermatrix zur Herstellung des ersten Vorformlings beinhalten. Durch lokale Variation von Druck und/oder Wärme im Schritt des Beaufschlagens des ersten Vorformlings können die unterschiedliche Tränkungsgrade mit thermoplastischem Elastomer gesteuert werden.

Beispielhaft kann das Verfahren weiterhin den Schritt des Kaschierens des thermoplastischen Elastomers als Deckschicht auf einer Oberseite der trockenen Faserlagen zur Herstellung des ersten Vorformlings umfassen. Dabei kann in einigen Ausführungsformen das Flächengewicht des kaschierten thermoplastischen Elastomers in dem zumindest einen ersten Bereich höher ist als in dem zumindest einen zweiten Bereich sein. Alternativ oder zusätzlich dazu kann auch die Schichtdicke des kaschierten thermoplastischen Elastomers in dem zumindest einen ersten Bereich höher ist als in dem zumindest einen zweiten Bereich gewählt werden. Durch die Einstellung unterschiedlicher Flächengewichte bzw. Schichtdicken kann bei Verwendung eines einheitlichen Verarbeitungsprozesses, d.h. bei einheitlicher Druckbeaufschlagung, Prozesstemperatur und/oder Wärmeeinwirkungsdauer die Tränkung der Faserlagen in den ersten und zweiten Bereichen lokal eingestellt werden. Ein höheres Flächengewicht bzw. eine höhere Schichtdicke an thermoplastischem Elastomer führt bei ansonsten gleichen Prozessbedingungen in der Verarbeitung des ersten Vorformlings zu einem höheren Tränkungsgrad bzw. einer höheren Tränkungstiefe der Faserlagen in dem ersten Bereich als in dem zweiten Bereich. Dies ermöglicht vorteilhafter Weise eine weniger komplexe Auslegung der verarbeitenden Maschinen, da die Imprägnierungseigenschaften des Vorformlings bereits in den Materialeigenschaften des Vorformlings vorab angelegt worden sind.

Gemäß einiger Ausführungsformen des erfindungsgemäßen Faserverbundlaminats kann das Laminat in dem zweiten Laminatbereich eine größere Dicke aufweisen als in dem ersten Laminatbereich.

Gemäß einiger weiterer Ausführungsformen des erfindungsgemäßen Faserverbundlaminats kann die thermoplastische Elastomerfolie thermoplastische Elastomere auf Urethanbasis aufweisen.

Gemäß einiger weiterer Ausführungsformen des erfindungsgemäßen Faserverbundlaminats können die Faserlagen Carbonfasern oder Glasfasern umfassen.

Gemäß einiger weiterer Ausführungsformen des erfindungsgemäßen Faserverbundlaminats kann die duroplastische Kunststoffmatrix Epoxidharze, ungesättigte Polyesterharze, Vinylesterharze, Phenylformaldehydharze, Diallylphthalatharze, Methacrylatharze, Polyurethane und/oder Melaminharze aufweisen.

Gemäß einiger weiterer Ausführungsformen des erfindungsgemäßen Faserverbundlaminats können Faserlagen des Faserverbundlaminats in dem ersten Laminatbereich durchgehend mit den Faserlagen der ersten Schicht des Faserverbundlaminats in dem zweiten Laminatbereich ausgebildet sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Illustration von Halbzeugfertigungsstadien in einem Verfahrensablauf eines Verfahrens zur Herstellung eines Faserverbundlaminats gemäß einer Ausführungsform der Erfindung,
Fig. 2 eine schematische Illustration von verschiedenen Laminathalbzeugen zum Einsatz als Vorformling in einem Verfahren zur Herstellung eines Faserverbundlaminats gemäß einer Ausführungsform der Erfindung,
Fig. 3 eine schematische Illustration eines Verfahrens zur Herstellung eines Faserverbundlaminats gemäß einer weiteren Ausführungsform der Erfindung, und
Fig. 4 eine schematische Illustration eines Fahrzeugs mit einem ein Faserverbundlaminat aufweisenden Fahrzeugbauteil gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist -jeweils mit denselben Bezugszeichen versehen.

### BESCHREIBUNG VON AUSFÜHRUNGSBEISPIELEN

Thermoplastische Elastomere im Sinne der vorliegenden Anmeldung umfassen alle Werkstoffe mit in thermoplastischem Matrixmaterial eingelassenen elastischen Polymerketten, die sich in physikalischen Prozessen unter Druck- und Temperatureinwirkung verarbeiten lassen. Thermoplastische Elastomerfolien im Sinne der vorliegenden Anmeldung umfassen dabei insbesondere thermoplastische Elastomere auf Urethanbasis (TPU), wie etwa Desmopan, Utechllan, Texin, Bonte oder auch Elastollan.

Duromere im Sinne der vorliegenden Anmeldung umfassen alle Kunststoffe, die nach ihrer Aushärtung nicht mehr verformt werden können, das heißt duroplastische Materialien, die im Gegensatz zu Thermoplasten aufgrund ihrer hohen Vernetzungsgrade nicht aufgeschmolzen werden können. Duromere oder auch duroplastische Harze im Sinne der vorliegenden Anmeldung umfassen dabei insbesondere Epoxidharze, ungesättigte Polyesterharze, Vinylesterharze, Phenylformaldehydharze, Diallylphthalatharze, Methacrylatharze, Polyurethane und Melaminharze.

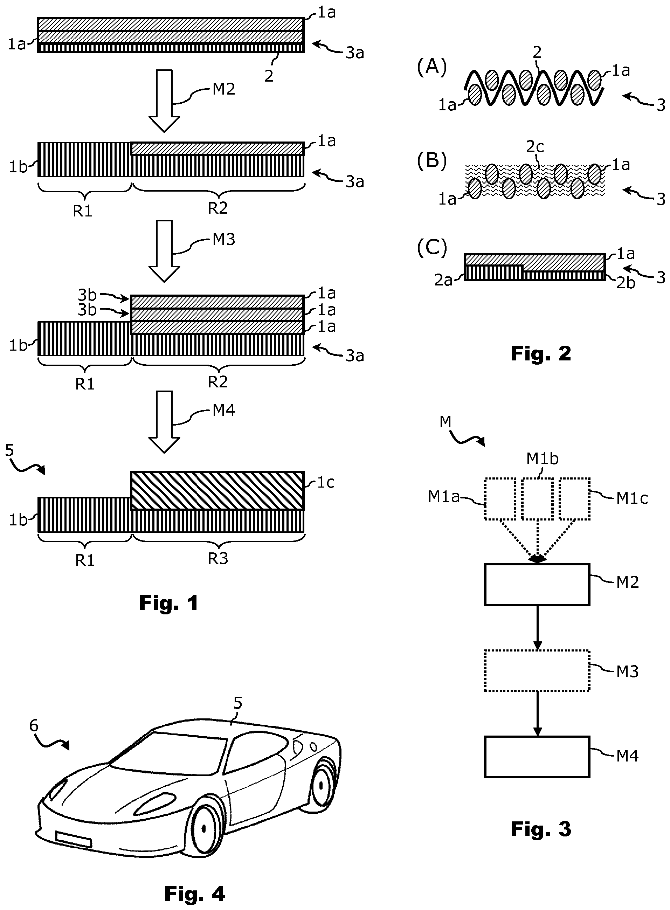

Fig. 1 zeigt eine schematische Illustration von Halbzeugfertigungsstadien in einem Verfahrensablauf eines Verfahrens zur Herstellung eines Faserverbundlaminats 5. Die Halbzeugfertigungsstadien in Fig. 1 werden im Folgenden beispielhaft im Zusammenhang mit Fig. 2 und 3 erläutert.

Fig. 3 zeigt ein Blockdiagramm eines schematischen Ablaufs eines Verfahrens M zur Herstellung von Faserverbundlaminaten, beispielsweise solcher Bauteile oder Komponenten, wie sie in im Zusammenhang mit den beispielhaften Zwischenprodukten bzw. Halbzeugfertigungsstadien der Fig. 1 erläutert werden. Dabei kann das Verfahren M zur Herstellung von Faserverbundlaminaten 5 eingesetzt werden, die beispielsweise Teil von Fahrzeugbauteilen sein können, welche für ein Fahrzeug eingesetzt werden können, zum Beispiel das in Fig. 3 beispielhaft dargestellte Fahrzeug 6. Beispiele für Fahrzeugbauteile, in denen das Faserverbundlaminat 5 eingesetzt werden kann, umfassen dabei Fahrzeugverdecke, Blachen oder Planen für Transportfahrzeuge und Transportanhänger, Instrumententafeln, Armaturenkomponenten oder Konsolenabdeckungen. Das Fahrzeug 6 ist beispielhaft als Personenkraftwagen dargestellt, allerdings sollte es klar sein, dass auch andere Fahrzeuge wie etwa Lastkraftwägen, Motorräder oder andere Fahrzeugtypen Fahrzeugbauteile mit erfindungsgemäßen Faserverbundlaminaten 5 aufweisen können.

Ferner können die erfindungsgemäßen Faserverbundlaminate auch in anderen Einsatzgebieten Anwendung finden. Beispielsweise können Faserverbundlaminate mit Carbon-Optik, wie sie in den hierin beschriebenen Verfahren gefertigt werden, auch für Fahrradbauteile eingesetzt werden, die in der Herstellung von Fahrrädern verwendet werden können. Zum Beispiel können erfindungsgemäße Faserverbundlaminate in Fahrradsätteln, Rahmenbauteilen, Schutzblechen oder ähnlichen Komponenten, welche eine lokal variierende Biegesteifigkeit umfassen, eingesetzt werden. Faserverbundlaminate mit Carbon-Optik, wie sie in den hierin beschriebenen Verfahren gefertigt werden, können auch für Sportartikelbauteile eingesetzt werden, die in der Herstellung von Sportartikeln verwendet werden können. Zum Beispiel können erfindungsgemäße Faserverbundlaminate in der Herstellung von Skistiefeln, Snowboardstiefeln, Skiern, Snowboards, Tennisschläger, Golfschläger, Segelbooten oder Eishockeyschlägern eingesetzt werden. Dadurch können Sportartikel mit lokal variierender Biegesteifigkeit und zugleich ansprechender Ästhetik gefertigt werden.

In einem ersten Schritt wird zunächst ein Vorformling 3a bereitgestellt, welcher ein oder mehrere trockene Faserlagen 1a und ein thermoplastisches Elastomer 2 aufweist. Die Bereitstellung des Vorformlings 3a kann auf verschiedene Arten und Weisen erfolgen: Neben dem ersten in Fig. 1 dargestellten Halbzeugstadium können auch andere Halbzeuge als erster Vorformling 3a dienen, wie in den Varianten (A), (B) und (C) der Fig. 2 beispielhaft dargestellt. Beispielsweise kann in einem optionalen Schritt M1a eine thermoplastische Elastomerfolie 2a als thermoplastisches Elastomer in den trockenen Faserlagen 1a zur Herstellung eines Vorformlings eingebettet werden. Ein solcher Vorformling 3 ist beispielhaft in Variante (A) der Fig. 2 illustriert. Eine erfindungsgemäße Möglichkeit besteht gemäß Schritt M1c darin, die trockenen Faserlagen 1a in einer thermoplastischen Elastomermatrix 2c zur Herstellung eines Vorformlings einzubetten. Ein solcher Vorformling 3 ist beispielhaft in Variante (B) der Fig. 2 illustriert. Schließlich ist es gemäß optionalem Schritt M1b auch möglich, thermoplastisches Elastomer 2 als Deckschicht auf einer Oberseite der trockenen Faserlagen 1a zur Herstellung eines Vorformlings aufzukaschieren. Wie in Fig. 2(C) dargestellt, kann ein solcher Vorformling auch unterschiedliche Schichtdicken 2a und 2b in verschiedenen Deckschichtbereichen aufweisen. Zusätzlich oder alternativ zur Variation der Schichtdicken einer aufkaschierten Elastomerdeckschicht kann auch das Flächengewicht des aufkaschierten thermoplastischen Elastomers lokal bzw. bereichsweise variiert werden.

Das in Fig. 1 oben dargestellte Halbzeugstadium mit dem ersten Vorformling 3a kann jeden der Vorformlingtypen 3 wie in Fig. 2 dargestellt verwenden. Das thermoplastische Elastomer ist dabei in Fig. 1 unabhängig von geometrischer Lage, Einbettung oder Aufbringung ganz allgemein mit dem Bezugszeichen 2 dargestellt. Dies dient lediglich zur Zwecken der Vereinfachung der Darstellung, nicht jedoch zur Beschränkung auf bestimmte Ausführungsvarianten. Die dazu verwendeten thermoplastischen Elastomere können thermoplastische Elastomere auf Urethanbasis (TPU) sein, und die Faserlagen 1a können Carbon- und/oder Glasfasern aufweisen.

Danach wird der erste Vorformling 3a in einem zweiten Schritt M2 derart mit Druck und/oder Wärmeeinwirkung beaufschlagt, dass der der thermoplastische Anteil des thermoplastischen Elastomers 2 den ersten Vorformling 3a in zumindest einem ersten Bereich R1 vollständig tränkt und in zumindest einem zweiten Bereich R2 nur teilweise tränkt. Dies wird erreicht, dass der Druck bzw. der Wärmeeintrag lokal variiert wird. Beispielsweise kann in dem ersten Bereich R1 ein höherer mechanischer Druck ausgeübt werden als in dem zweiten Bereich R2. Alternativ oder zusätzlich dazu kann die Temperatur in dem zweiten Bereich R2 während des Tränkvorgangs höher eingestellt werden als in dem ersten Bereich R1. Es kann auch vorgesehen sein, dass der Vorformling 3a nur von einer Seite her (in Fig. 1 von der Unterseite) erhitzt wird. Außerdem kann die Dauer, während der Druck und/oder erhöhte Temperatur in den beiden Bereichen R1 und R2 aufrechterhalten werden, lokal variiert werden. Beispielsweise kann die Druck- bzw. Wärmeeinwirkung in dem ersten Bereich R1 wesentlich länger aufrechterhalten werden als in dem zweiten Bereich R2. Es kann dabei möglich sein, Druck- und/oder Wärmeeinwirkung derart einzustellen, dass der thermoplastische Anteil des thermoplastischen Elastomers 2 den ersten Vorformling 3a in dem zumindest einen zweiten Bereich R2 nur auf einer ersten Seite tränkt (im Beispiel der Fig. 1 als Unterseite des ersten Vorformlings 3a dargestellt).

In einem optionalen dritten Schritt M3 kann dann mindestens ein zweiter Vorformling 3b auf dem ersten Vorformling 3a in dem zweiten Bereich R2 angeordnet werden. Beispielsweise können mehrere zweite Vorformlinge 3b auf einer Seite des ersten Vorformlings 3a gestapelt werden, auf der die Faserlagen 1a durch das thermoplastische Elastomer 2 noch ungetränkt sind (im Beispiel der Fig. 1 als Oberseite des ersten Vorformlings 3a im Bereich R2 dargestellt).

Die zweiten Vorformlinge 3b können in manchen Varianten ähnlich wie die ersten Vorformlinge 3a aufgebaut sein, das heißt, die zweiten Vorformlinge 3b können trockene Faserlagen 1a mit thermoplastischen Elastomeranteilen 2 aufweisen. Dadurch muss nur ein Verarbeitungsvorgang für alle Vorformlinge durchgeführt werden, was Fertigungsaufwand und -kosten sparen kann. Es kann allerdings auch möglich sein, für die zweiten Vorformlinge 3b trockene Faserlagen 1a aus einem Fasermaterial zu verwenden, welches sich von dem Fasermaterial der trockenen Faserlagen 1a des ersten Vorformlings 3a unterscheidet. Außerdem können die zweiten Vorformlinge 3b im Aufbau auch grundsätzlich von den ersten Vorformlingen 3a verschieden sein: Beispielsweise können Fasergelege ("Non-Crimp Fabrics", NCF), Laminate in Sandwichbauweise oder Kernstrukturen als zweite Vorformlinge 3b verwendet werden. Die zweiten Vorformlinge 3b können dabei gemäß den erwünschten mechanischen Eigenschaften ausgewählt werden, da sie von der Vorderseite optisch durch die Faserlagen des ersten Vorformlings 3a abgeschirmt werden.

Durch die Verwendung von ein oder mehreren zweiten Vorformlingen 3b, die auf dem ersten Vorformling 3a angeordnet werden, weist das Faserverbundlaminat 5 in dem zweiten Bereich R2 eine größere lokale Dicke auf als in dem ersten Bereich R1. Die lokale Dicke und damit die Flexibilität bzw. Biegesteifigkeit der zweiten Bereiche R2 kann gegenüber den ersten Bereichen R1 damit durch Wahl der Anzahl und Dimensionen der zweiten Vorformlinge 3b gezielt beeinflusst werden.

Schließlich wird in einem vierten Schritt M4 der zweite Bereich R2 mit dem ersten Vorformling 3a und gegebenenfalls den zweiten Vorformlingen 3b in einer duroplastischen Kunststoffmatrix getränkt, die dann die ersten und gegebenenfalls zweiten Vorformlinge 3a, 3b bei einem Aushärten formschlüssig verbindet. Die duroplastische Kunststoffmatrix kann zum Beispiel Epoxidharze, ungesättigte Polyesterharze, Vinylesterharze, Phenylformaldehydharze, Diallylphthalatharze, Methacrylatharze, Polyurethane und/oder Melaminharze aufweisen. Durch das Aushärten mit der duroplastischen Kunststoffmatrix können die zweiten Vorformlinge 3b auf die zweiten Bereiche R2 auflaminiert werden, so dass sich die Biegesteifigkeit in diesen Bereichen des fertigen Faserverbundlaminats 5 gegenüber den ersten Bereichen R1 lokal erhöht. In den ersten Bereichen R1, in denen die Faserlagen vollständig mit dem thermoplastischen Elastomer getränkt werden, bleibt die Struktur hingegen flexibel.

Auch wenn keine zweiten Vorformlinge 3b verwendet werden, kann die Tränkung und Aushärtung des nur teilweise mit dem thermoplastischen Elastomer imprägnierten Bereich R2 zur Bildung eines Hybridimprägnierungsbereiches R3 führen, dessen Biegesteifigkeit höher ist als die Biegesteifigkeit im ersten Bereich R1, der vollständig mit dem thermoplastischen Elastomer getränkt ist. In dem hybridimprägnierten Bereich R3 existieren zwei Schichten übereinander, von denen die in Fig. 1 auf der Unterseite dargestellte Vorderseitenschicht 1b mit dem thermoplastischen Elastomer und die darüber liegende Hinterseitenschicht 1c mit der duroplastischen Kunststoffmatrix imprägniert ist. Dies führt zu einer Vorderseitenschicht 1b, in der die Faserlagen des Faserverbundlaminats 5 sich von dem ersten Laminatbereich R1 durchgehend in die Vorderseitenschicht des zweiten Laminatbereichs R2 bzw. des Hybridimprägnierungsbereiches R3 hindurch erstrecken. Somit entsteht eine gleichmäßige und homogen strukturierte Oberfläche des Faserverbundlaminats 5 ohne Nahtstellen.

Das beschriebene Verfahren sowie die entstehenden Faserverbundlaminate können in allen Bereichen der Transportindustrie, beispielsweise für Straßenkraftfahrzeuge, für Schienenfahrzeuge, für Luftfahrzeuge oder für Wasserfahrzeuge, aber auch im Ingenieurs- und Maschinenbauwesen generell eingesetzt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist.

Die Ausführungsbeispiele wurden ausgewählt und beschrieben, um die Erfindung , wie sie in den Ansprüchen definiert ist, und ihre Anwendungsmöglichkeiten in der Praxis bestmöglich darstellen zu können. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### LISTE DER BEZUGSZEICHEN

- 1a: Trockene Faserlage
- 1b: Thermoplastisch imprägnierte Faserlage
- 1c: Duroplastisch imprägnierte Faserlage
- 2: Thermoplastisches Elastomer
- 2a: Thermoplastische Elastomerschicht
- 2b: Thermoplastische Elastomerschicht
- 2c: Thermoplastische Elastomermatrix
- 3: Vorformling
- 3a: Vorformling
- 3b: Vorformling
- 5: Faserverbundlaminat
- 6: Fahrzeug
- M: Verfahren
- M1a: Verfahrensschritt
- M1b: Verfahrensschritt
- M1c: Verfahrensschritt
- M2: Verfahrensschritt
- M3: Verfahrensschritt
- M4: Verfahrensschritt
- R1: Durchimprägnierter Bereich
- R2: Teilimprägnierter Bereich
- R3: Hybridimprägnierter Bereich

## Patentansprüche

1. Verfahren (M) zum Herstellen eines Faserverbundlaminats (5), umfassend:
Beaufschlagen (M2) eines ersten Vorformlings (3a), welcher ein oder mehrere trockene Faserlagen (1a) und ein thermoplastisches Elastomer (2; 2a; 2b; 2c) aufweist, mit Druck und/oder Wärme, so dass der thermoplastische Anteil des thermoplastischen Elastomers (2; 2a; 2b; 2c) die trockenen Faserlagen (1a) des ersten Vorformlings (3a) in zumindest einem ersten Bereich (R1) vollständig tränkt und in zumindest einem zweiten Bereich (R2) nur teilweise tränkt;
Tränken und Aushärten (M4) der nicht durch den thermoplastischen Anteil des thermoplastischen Elastomers (2; 2a; 2b; 2c) getränkten, noch trockenen Faserlagen (1a) des zweiten Bereichs (R2) des ersten Vorformlings (3a) in einer duroplastischen Kunststoffmatrix;
und
Einbetten (M1c) der trockenen Faserlagen (1a) in einer thermoplastischen Elastomermatrix (2c) zur Herstellung des ersten Vorformlings (3a),
wobei der Druck und/oder die Wärme im Schritt des Beaufschlagens (M2) des ersten Vorformlings (3a) lokal variiert werden.

2. Verfahren (M) gemäß Anspruch 1, wobei die duroplastische Kunststoffmatrix Epoxidharze, ungesättigte Polyesterharze, Vinylesterharze, Phenylformaldehydharze, Diallylphthalatharze, Methacrylatharze, Polyurethane und/oder Melaminharze aufweist.

3. Verfahren (M) gemäß einem der Ansprüche 1 und 2, wobei das thermoplastische Elastomer (2) thermoplastische Elastomere auf Urethanbasis aufweist.

4. Verfahren (M) gemäß einem der Ansprüche 1 bis 3, wobei die trockenen Faserlagen (1a) Carbonfasern oder Glasfasern umfassen.

5. Verfahren (M) gemäß einem der Ansprüche 1 bis 4, weiterhin umfassend:
Anordnen (M3) mindestens eines zweiten Vorformlings (3b) auf dem ersten Vorformling (3a) in dem zweiten Bereich (R2); und
Tränken und Aushärten des mindestens einen zweiten Vorformlings (3b) in der duroplastischen Kunststoffmatrix gemeinsam mit dem Tränken und Aushärten (M4) der noch trockenen Faserlagen (1a) ersten Vorformlings (3a).

6. Verfahren (M) gemäß Anspruch 5, wobei der mindestens eine zweite Vorformling (3b) trockene Faserlagen (1a) aus einem Fasermaterial aufweist, welches sich von dem Fasermaterial der trockenen Faserlagen (1a) des ersten Vorformlings (3a) unterscheidet.

7. Faserverbundlaminat (5) mit ein oder mehreren Faserlagen, umfassend:
einen ersten Laminatbereich (R1), in dem die Faserlagen (1b) des Faserverbundlaminats (5) mit einem thermoplastischen Elastomermaterial (2; 2a; 2b; 2c) getränkt sind; und
einen zweiten Laminatbereich (R2), in dem Faserlagen einer ersten Schicht (1b) des Faserverbundlaminats (5) mit der thermoplastischen Elastomermatrix und Faserlagen mindestens einer über der ersten Schicht (1b) liegenden zweiten Schicht (1c) des Faserverbundlaminats (5) mit einer duroplastischen Kunststoffmatrix getränkt sind,
**dadurch gekennzeichnet, dass**
das Faserverbundlaminat (5) mit einem Verfahren gemäß einem der Ansprüche 1 bis 6 hergestellt wird.

8. Faserverbundlaminat (5) gemäß Anspruch 7, wobei das Faserverbundlaminat (5) in dem zweiten Laminatbereich (R2) eine größere Dicke aufweist als in dem ersten Laminatbereich (R1).

9. Faserverbundlaminat (5) gemäß einem der Ansprüche 7 und 8, wobei das thermoplastische Elastomermaterial thermoplastische Elastomere auf Urethanbasis aufweist.

10. Faserverbundlaminat (5) gemäß einem der Ansprüche 7 bis 9, wobei die Vielzahl von Faserlagen Carbonfasern und/oder Glasfasern umfassen.

11. Faserverbundlaminat (5) gemäß einem der Ansprüche 7 bis 10, wobei die duroplastische Kunststoffmatrix Epoxidharze, ungesättigte Polyesterharze, Vinylesterharze, Phenylformaldehydharze, Diallylphthalatharze, Methacrylatharze, Polyurethane und/oder Melaminharze aufweist.

12. Faserverbundlaminat (5) gemäß einem der Ansprüche 7 bis 11, wobei die Faserlagen des Faserverbundlaminats (5) in dem ersten Laminatbereich (R1) durchgehend mit den Faserlagen der ersten Schicht (1b) des Faserverbundlaminats (5) in dem zweiten Laminatbereich (R2) ausgebildet sind.

13. Fahrzeug (6) mit einem Fahrzeugbauteil, welches ein Faserverbundlaminat (5) gemäß einem der Ansprüche 7 bis 12 aufweist.

14. Fahrrad mit einem Fahrradbauteil, welches ein Faserverbundlaminat (5) gemäß einem der Ansprüche 7 bis 12 aufweist.

15. Sportartikel mit einem Sportartikelbauteil, welches ein Faserverbundlaminat (5) gemäß einem der Ansprüche 7 bis 12 aufweist.

## Claims

1. Method (M) for producing a fibre composite laminate (5), comprising:
subjecting (M2) a first preform (3a), which comprises one or more dry fibre layers (1a) and a thermoplastic elastomer (2; 2a; 2b; 2c), to pressure and/or heat, so that the thermoplastic fraction of the thermoplastic elastomer (2; 2a; 2b; 2c) completely impregnates the dry fibre layers (1a) of the first preform (3a) in at least one first region (R1) and impregnates them only partially in at least one second region (R2);
impregnating and curing (M4) the fibre layers (1a) of the second region (R2) of the first preform (3a) that are still dry, having not been impregnated by the thermoplastic fraction of the thermoplastic elastomer (2; 2a; 2b; 2c), in a thermosetting polymer matrix;
and
embedding (M1c) the dry fibre layers (1a) in a thermoplastic elastomer matrix (2c) to produce the first preform (3a),
wherein the pressure and/or the heat in the step of subjecting (M2) the first preform (3a) are varied locally.

2. Method (M) according to Claim 1, wherein the thermosetting polymer matrix comprises epoxy resins, unsaturated polyester resins, vinyl ester resins, phenyl-formaldehyde resins, diallyl phthalate resins, methacrylate resins, polyurethanes and/or melamine resins.

3. Method (M) according to either of Claims 1 and 2, wherein the thermoplastic elastomer (2) comprises urethane-based thermoplastic elastomers.

4. Method (M) according to any of Claims 1 to 3, wherein the dry fibre layers (1a) comprise carbon fibres or glass fibres.

5. Method (M) according to any of Claims 1 to 4, further comprising:
arranging (M3) at least one second preform (3b) on the first preform (3a) in the second region (R2); and
impregnating and curing the at least one second preform (3b) in the thermosetting polymer matrix together with the impregnating and curing (M4) of the fibre layers (1a) of the first preform (3a) that are still dry.

6. Method (M) according to Claim 5, wherein the at least one second preform (3b) comprises dry fibre layers (1a) of a fibre material which differs from the fibre material of the dry fibre layers (1a) of the first preform (3a) .

7. Fibre composite laminate (5) having one or more fibre layers, comprising:
a first laminate region (R1), in which the fibre layers (1b) of the fibre composite laminate (5) are impregnated with a thermoplastic elastomer material (2; 2a; 2b; 2c); and
a second laminate region (R2), in which fibre layers of a first lamina (1b) of the fibre composite laminate (5) are impregnated with the thermoplastic elastomer matrix and fibre layers of at least one second lamina (1c) of the fibre composite laminate (5), lying over the first lamina (1b), are impregnated with a thermosetting polymer matrix,
**characterized in that**
the fibre composite laminate (5) is produced with a method according to any of Claims 1 to 6.

8. Fibre composite laminate (5) according to Claim 7, wherein the fibre composite laminate (5) has a greater thickness in the second laminate region (R2) than in the first laminate region (R1).

9. Fibre composite laminate (5) according to either of Claims 7 and 8, wherein the thermoplastic elastomer material comprises urethane-based thermoplastic elastomers.

10. Fibre composite laminate (5) according to any of Claims 7 to 9, wherein the multiplicity of fibre layers comprise carbon fibres and/or glass fibres.

11. Fibre composite laminate (5) according to any of Claims 7 to 10, wherein the thermosetting polymer matrix comprises epoxy resins, unsaturated polyester resins, vinyl ester resins, phenyl-formaldehyde resins, diallyl phthalate resins, methacrylate resins, polyurethanes and/or melamine resins.

12. Fibre composite laminate (5) according to any of Claims 7 to 11, wherein the fibre layers of the fibre composite laminate (5) in the first laminate region (R1) are embodied continuously with the fibre layers of the first lamina (1b) of the fibre composite laminate (5) in the second laminate region (R2).

13. Vehicle (6) having a vehicle component which comprises a fibre composite laminate (5) according to any of Claims 7 to 12.

14. Pedal cycle having a pedal cycle component which comprises a fibre composite laminate (5) according to any of Claims 7 to 12.

15. Sports article having a sports article component which comprises a fibre composite laminate (5) according to any of Claims 7 to 12.

## Revendications

1. Procédé (M) de préparation d'un stratifié composite fibreux (5), comprenant :
la sollicitation (M2) d'une première préforme (3a) qui présente une ou plusieurs couches de fibres sèches (1a) et un élastomère thermoplastique (2 ; 2a ; 2b ; 2c), avec de la pression et/ou de la chaleur, de sorte que la partie thermoplastique de l'élastomère thermoplastique (2 ; 2a ; 2b ; 2c) imprègne totalement dans au moins une première zone (R1) et imprègne seulement partiellement dans au moins une deuxième zone (R2) les couches de fibres sèches (1a) de la première préforme (3a) ;
l'imprégnation et le durcissement (M4) des couches de fibres (1a) non imprégnées par la partie thermoplastique de l'élastomère thermoplastique (2 ; 2a ; 2b ; 2c), encore sèches, de la deuxième zone (R2) de la première préforme (3a) dans une matrice de matière plastique duroplastique ;
et
l'incorporation (M1c) des couches de fibres sèches (1a) dans une matrice d'élastomère thermoplastique (2c) pour la préparation de la première préforme (3a),
la pression et/ou la chaleur dans l'étape de sollicitation (M2) de la première préforme (3a) pouvant varier localement.

2. Procédé (M) selon la revendication 1, la matrice de matière plastique duroplastique présentant des résines époxy, des résines de polyester insaturées, des résines d'ester de vinyle, des résines de phénylformaldéhyde, des résines de phtalate de diallyle, des résines de méthacrylate, des polyuréthanes et/ou des résines de mélamine.

3. Procédé (M) selon l'une quelconque des revendications 1 et 2, l'élastomère thermoplastique (2) présentant des élastomères thermoplastiques à base d'uréthane.

4. Procédé (M) selon l'une quelconque des revendications 1 à 3, les couches de fibres sèches (1a) comprenant des fibres de carbone ou des fibres de verre.

5. Procédé (M) selon l'une quelconque des revendications 1 à 4, comprenant en outre :
la disposition (M3) d'au moins une deuxième préforme (3b) sur la première préforme (3a) dans la deuxième zone (R2) ; et
l'imprégnation et le durcissement de l'au moins une deuxième préforme (3b) dans la matrice de matière plastique duroplastique conjointement avec l'imprégnation et le durcissement (M4) des couches de fibres encore sèches (1a) de la première préforme (3a) .

6. Procédé (M) selon la revendication 5, l'au moins une deuxième préforme (3b) présentant des couches de fibres sèches (1a) composées d'un matériau fibreux qui se différencie du matériau fibreux des couches de fibres sèches (1a) de la première préforme (3a).

7. Stratifié composite fibreux (5) comportant une ou plusieurs couches de fibres, comprenant :
une première zone de stratifié (R1), dans laquelle les couches de fibres (1b) du stratifié composite fibreux (5) sont imprégnées avec un matériau élastomère thermoplastique (2 ; 2a ; 2b ; 2c) ; et une deuxième zone de stratifié (R2), dans laquelle des couches de fibres d'une première couche (1b) du stratifié composite fibreux (5) sont imprégnées avec la matrice d'élastomère thermoplastique et des couches de fibres d'au moins une deuxième couche (1c) du stratifié composite fibreux (5) située sur la première couche (1b) sont imprégnées avec une matrice de matière plastique duroplastique,
**caractérisé en ce que**
le stratifié composite fibreux (5) est préparé par un procédé selon l'une quelconque des revendications 1 à 6.

8. Stratifié composite fibreux (5) selon la revendication 7, le stratifié composite fibreux (5) dans la deuxième zone de stratifié (R2) présentant une épaisseur plus grande que dans la première zone de stratifié (R1).

9. Stratifié composite fibreux (5) selon l'une quelconque des revendications 7 et 8, le matériau élastomère thermoplastique présentant des élastomères thermoplastiques à base d'uréthane.

10. Stratifié composite fibreux (5) selon l'une quelconque des revendications 7 à 9, la pluralité de couches de fibres comprenant des fibres de carbone et/ou des fibres de verre.

11. Stratifié composite fibreux (5) selon l'une quelconque des revendications 7 à 10, la matrice de matière plastique duroplastique présentant des résines époxy, des résines de polyester insaturées, des résines d'ester de vinyle, des résines de phénylformaldéhyde, des résines de phtalate de diallyle, des résines de méthacrylate, des polyuréthanes et/ou des résines de mélamine.

12. Stratifié composite fibreux (5) selon l'une quelconque des revendications 7 à 11, les couches de fibres du stratifié composite fibreux (5) dans la première zone de stratifié (R1) étant formées de manière continue avec les couches de fibres de la première couche (1b) du stratifié composite fibreux (5) dans la deuxième zone de stratifié (R2).

13. Véhicule (6) comportant un composant de véhicule qui présente un stratifié composite fibreux (5) selon l'une quelconque des revendications 7 à 12.

14. Bicyclette comportant un composant de bicyclette qui présente un stratifié composite fibreux (5) selon l'une quelconque des revendications 7 à 12.

15. Article de sport comportant un composant d'article de sport qui présente un stratifié composite fibreux (5) selon l'une quelconque des revendications 7 à 12.
